# EUROPEAN PATENT SPECIFICATION

(11) **EP 3 972 942 B1**
(45) Date of publication and mention of the grant of the patent: **08.01.2025**
(21) Application number: 20729157.6
(22) Date of filing: 20.05.2020
(51) Int. Cl.: C03C 17/34

(54) **METHOD OF REDUCING THE EMISSIVITY OF A COATED GLASS ARTICLE**
VERFAHREN ZUR VERMINDERUNG DES EMISSIONSVERMÖGENS EINES BESCHICHTETEN GLASGEGENSTANDES
PROCÉDÉ DE RÉDUCTION DE L'ÉMISSIVITÉ D'UN ARTICLE EN VERRE REVÊTU

(30) Priority: 20.05.2019 US 201962850143 P
(43) Date of publication of application: 30.03.2022
(73) Proprietor: Pilkington Group Limited, Lathom Nr. Ormskirk Lancashire L40 5UF (GB)
(72) Inventor: VARANASI, Srikanth, Ottawa Hills, Ohio 43606 (US); STRICKLER, David Alan, Toledo, Ohio 43606 (US); RANJAN, Vikash, Perrysburg, Ohio 43551 (US)
(74) Representative: Marsh, Andrew James
(86) International application number: PCT/GB2020/051236
(87) International publication number: WO 2020/234594

(56) References cited:
- EP-A1- 1 057 796
- WO-A1-2006/091668
- WO-A2-2012/134821

## Description

The invention relates to a method of controlling the emissivity of a coated glass article.

Coatings on glass can be formed from a wide variety of materials to accomplish a variety of functions. As an example, a coating may be formed on glass to decrease the emissivity exhibited by the glass. WO2012134821A2 describes a multi-layer pyrolytic coating stack deposited on a tinted glass substrate to form a coated glass article exhibiting a desired combination of emissivity, visible light transmittance and solar heat gain coefficient. WO2006091668A1 describes a laminated glass unit having at least two sheets of glass separated and bonded by a polymeric interlayer material, and further having multi-layer thin film coatings on each of the unbonded surfaces of the at least two glass sheets. The thin films deposited on the unbonded glass surfaces have anti-reflective, iridescence-suppressing and solar control properties when suitable configurations, materials and layer thicknesses are chosen.

Under certain conditions, the emissivity decreasing coating may be damaged. Damage to such a coating may increase the emissivity exhibited by the coated glass article, which may make the coated glass article unsuitable for its intended use.

Thus, it would be desirable to provide a method that allows the emissivity of a glass article to be reduced if an emissivity decreasing coating formed thereon has been damaged.

### BRIEF DESCRIPTION OF THE DRAWINGS

The above, as well as other advantages of the present invention will become readily apparent to those skilled in the art from the following detailed description when considered in the light of the accompanying drawings in which:
FIG. 1 is a sectional view of an embodiment of a coated glass article in accordance with the invention;
FIG. 2 is a sectional view of an embodiment of an apparatus for use in controlling the emissivity of the coated glass article of FIG. 1; and
FIG. 3 illustrates an infrared radiation reflectance spectrum of separate coated glass articles before and after practicing certain embodiments of the invention.

It is to be understood that the invention may assume various alternative orientations and step sequences, except where expressly specified to the contrary. It is also to be understood that the specific articles, apparatuses, methods, and features illustrated in the attached drawings, and described in the following specification are simply exemplary embodiments of the inventive concepts. Hence, specific dimensions, directions, or other physical characteristics relating to the embodiments disclosed are not to be considered as limiting, unless expressly stated otherwise. Also, although they may not be, like elements found in the aforementioned embodiments may be referred to with like identifiers within this section of the application.

A method of reducing the emissivity of a coated glass article is described herein, as set out in claim 1.

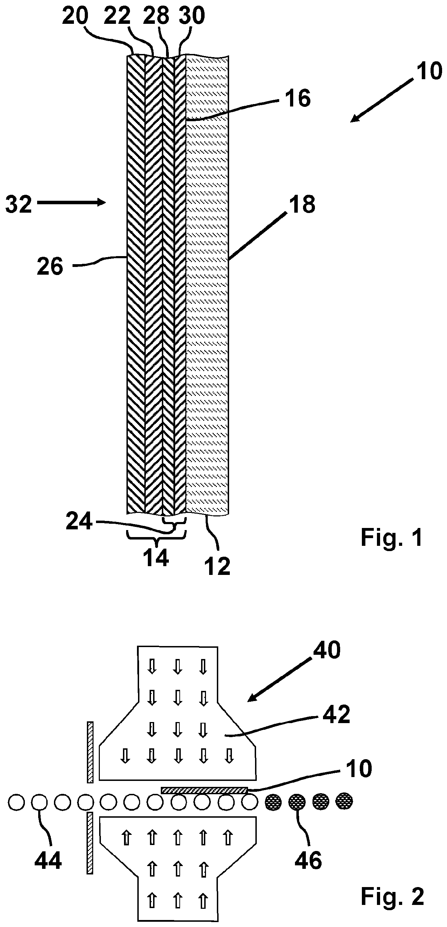

The method is practiced using a coated glass article 10. Embodiments of the coated glass article 10 are illustrated in FIG. 1. It should be appreciated that the method can also be practiced using coated glass articles that are not depicted in FIG. 1 or described below.

The coated glass article 10 may be utilized in a window for a vehicle (not depicted). It would be understood by one of ordinary skill in the art that the coated glass article described herein may have applications to on-highway and off-highway vehicles. Also, the coated glass article could be utilized in a commercial or residential glazing or have, for example, architectural, photovoltaic, industrial, locomotive, naval, and aerospace applications.

When the coated glass article 10 is utilized in a vehicle window, the coated glass article 10 may be installed in any appropriate body opening of the vehicle. In some embodiments, the coated glass article 10 may be utilized in a windshield, side window, or rear window of the vehicle. In other embodiments, the window could be utilized in another body opening in the vehicle. For example, a window having the coated glass article 10 could be installed in an opening in the roof of the vehicle. In this embodiment, the coated glass article 10 may be utilized as a roof glazing in a sunroof or moonroof application.

As illustrated in FIG. 1, the coated glass article 10 comprises a glass substrate 12. In some embodiments, the glass substrate 12 is not limited to a particular thickness. However, in certain embodiments, the glass substrate 12 may have a thickness of 20.0 millimeters (mm) or less. Preferably, the glass substrate 12 has a thickness of 0.5-20.0 mm. In some embodiments, the glass substrate 12 may have a thickness of 0.5-10.0 mm. More preferably, the glass substrate 12 has a thickness of 0.5-5.0 mm. In some embodiments, the glass substrate 12 has a thickness of 1.5-5.0 mm.

The glass substrate 12 may be of any of the conventional glass compositions known in the art. Preferably, the glass substrate 12 is a soda-lime-silica glass. When the glass substrate 12 is a soda-lime-silica glass, the glass substrate 12 may comprise 68-74 weight % SiO₂, 0-3 weight % Al₂O₃, 0-6 weight % MgO, 5-14 weight % CaO, 10-16 weight % Na₂O, 0-2 weight % SO₃, 0.005-4.0 weight % Fe₂O₃ (total iron), and 0-5 weight % K₂O. As used herein, the phrase "total iron" refers to the total weight of iron oxide (FeO + Fe₂O₃) contained in the glass calculated as Fe₂O₃. The glass may also contain other additives, for example, refining agents, which would normally be present in an amount of up to 2%. In this embodiment, the glass substrate 12 may be provided as a portion of a float glass ribbon. When the glass substrate 12 is formed as a portion of a float glass ribbon, the glass substrate 12 may be clear float glass. In some of these embodiments, clear float glass may mean a glass having a composition as defined in a related standard such as BS EN 572-1:2012+A1:2016 and BS EN 572-2:2012. However, the glass substrate 12 may be of another composition such as, for example, a borosilicate or aluminosilicate composition.

The color of the glass substrate 12 can vary between embodiments of the coated glass article 10. In some embodiments, the glass substrate 12 may be clear. In these embodiments, the glass substrate 12 may exhibit a total visible light transmittance of 88% or more when measured at a reference thickness of 2.1 mm in the CIELAB color scale system (Illuminant C, 10 degree observer). In one such embodiment, the glass substrate 12 has a low iron content, which allows for the high visible light transmittance. For example, the glass substrate 12 may comprise 0.20 weight % Fe₂O₃ (total iron) or less. More preferably, in this embodiment, the glass substrate 12 comprises 0.1 weight % Fe₂O₃ (total iron) or less, and, even more preferably, a 0.02 weight % Fe₂O₃ (total iron) or less. In still other embodiments, the glass substrate 12 may be tinted or colored.

When the glass substrate 12 is tinted, the glass substrate 12 may comprise 0.1-4.0 weight % Fe₂O₃ (total iron). Preferably, when the glass substrate 12 is tinted, the glass substrate 12 comprises 0.5-4.0 weight % Fe₂O₃ (total iron). In some of these embodiments, the glass substrate 12 may comprise 0.05-1.6 by weight of ferrous oxide (calculated as FeO). Further, when the glass substrate 12 is tinted, the glass substrate 12 may comprise certain colorants. For example, the glass substrate 12 may comprise one or more of cobalt oxide (calculated as Co₃O₄) in an amount up to 600 ppm by weight of glass, nickel oxide (calculated as NiO) in an amount up to 500 ppm by weight of glass, and selenium in an amount up to 50 ppm by weight of glass. In an embodiment, the glass substrate 12 comprises nickel oxide (calculated as NiO) of 100-500 ppm. When the glass substrate 12 is tinted, it is preferred that the glass substrate 12 is of, for example, a grey, grey-blue, green, blue-green, or bronze color.

When the glass substrate 12 is of a grey color, the glass substrate 12 may comprise 0.1-4.0 weight % Fe₂O₃ (total iron). Preferably, when the glass substrate 12 is of a grey color, the glass substrate 12 comprises 1.2-3.0 weight % Fe₂O₃ (total iron). Also, in these embodiments, the glass substrate 12 may have an a* value of -5t5, preferably -4±3, a b* value of 0±10, preferably 4t1 and an L* of 50±10, preferably 50±5 in the CIELAB color scale system. In these embodiments, the grey glass substrate has a visible light transmission of 50% or less when the glass substrate 12 has a nominal thickness of 6 mm. Preferably, the grey glass substrate has a visible light transmission of 7-11 % when the glass substrate 12 has a nominal thickness of 6 mm. The grey glass pane may be sold under the trademark Galaxsee and manufactured by Pilkington. In other embodiments, the glass substrate 12 may be a grey glass having similar optical properties to Galaxsee by Pilkington or a grey glass having lower light transmission properties than Galaxsee by Pilkington at a nominal thickness.

When the glass substrate 12 is of a green color, the glass substrate 12 may comprise 0.2-2.0 weight % Fe₂O₃ (total iron). In some embodiments, when the glass substrate 12 is of a green color, the glass substrate 12 comprises 0.3-1.2 weight % Fe₂O₃ (total iron). In other embodiments where the glass substrate 12 is of a green color, the glass substrate 12 may comprise greater than 1.2 weight % Fe₂O₃ (total iron). Also, in these embodiments, the glass substrate 12 may comprise 0-2.0% TiO₂. In some embodiments, the glass substrate 12 may have an a* value of -11 to -1, a b* value of -2 to 8, and an L* of 60 or more in the CIELAB color scale system. In these embodiments, the green glass substrate has a visible light transmission of 50% or more when the glass substrate 12 has a nominal thickness of 6 mm.

A coating 14 is formed on the glass substrate 12. Preferably, the coating 14 is formed on a first major surface 16 of the glass substrate 12. When the coating 14 is formed directly on the glass substrate 12, there are no intervening coatings between the coating 14 and the glass substrate 12. Preferably, a second major surface 18 of the glass substrate 12 and an opposite side of the coated glass article 10 is uncoated. It is preferred that when the coated glass article is utilized in a vehicle window, the first major surface 16 of the glass substrate 12 and the coating 14 face into the passenger cabin of the vehicle.

The coating 14 comprises more than one layer 20-24. The coating 14 comprises a first layer 20 and a second layer 22. In other embodiments, the coating 14 may comprise a first layer 20, second layer 22, and an iridescence-suppressing interlayer 24. In the embodiment illustrated in FIG. 1, the coating 14 may consist of the first layer 20, second layer 22, and iridescence-suppressing interlayer 24. The coating 14 is provided to reduce the emissivity exhibited by the coated glass article 10. In some embodiments, the coating 14 may be configured to reduce the visible light reflection exhibited by the coated glass article 10.

In an embodiment, the coating 14 is pyrolytic. As used herein, the term "pyrolytic" may refer to the coating or a layer thereof being chemically bonded to the glass substrate or another layer. Preferably, each layer 20-24 is pyrolytic. The coating 14 and one or more of its layers 20-24 may be formed in conjunction with the manufacture of the glass substrate 12. Preferably, in these embodiments, the glass substrate 12 is formed utilizing the well-known float glass manufacturing process. In embodiments where the glass substrate 12 is provided as a portion of a float glass ribbon, the coating 14 or one or more of its layers 20-24 may be formed in the heated zone of the float glass manufacturing process.

The coating 14 is deposited on the glass substrate 12. The coating layers 20-24 may be deposited by any suitable method. However, in some embodiments, at least one layer 20-24 is deposited by atmospheric pressure chemical vapor deposition (APCVD). In these embodiments, one or more layers 20-24 may be deposited by another known deposition method such as, for example, a sol-gel technique or a sputter technique.

The first layer 20 is deposited over the glass substrate 12. The first layer 20 is deposited over the second layer 22. Preferably, the first layer 20 is deposited directly on the second layer 22. When the first layer 20 is deposited directly on the second layer 22, there are no intervening layers between the second layer 22 and the first layer 20. In some embodiments, the first layer 20 may be the outermost layer of the coating 14. When the first layer 20 is the outermost layer of the coating 14, the first layer 20 forms an outer surface 26 of the coated glass article 10. When the coated glass article 10 is included in a vehicle window, it is preferred that the outer surface 26 faces into the passenger cabin of the vehicle.

Preferably, the first layer 20 has a refractive index that is less than the refractive index of the second layer 22. In some embodiments, the first layer 20 has a refractive index that is 1.7 or less. Preferably, the refractive index of the first layer 20 is 1.4-1.7. In an embodiment, the refractive index of the first layer 20 may be between 1.5 and 1.7. In another embodiment, the refractive index of the first layer 20 may be between 1.4 and 1.5. It should be noted that the refractive index values described herein are reported as an average value across 400-780 nm of the electromagnetic spectrum.

The first layer 20 comprises silicon dioxide (SiO₂) or another suitable oxide of silicon. The first layer 20 may also include a trace amount of one or more additional constituents such as, for example, carbon. Thus, in certain embodiments, the first layer 20 may consist essentially of silicon dioxide. However, in other embodiments, the first layer 20 may comprise an oxide of silicon and one or more additional materials, which are provided to increase the refractive index of the first layer 20 above 1.5. In one such embodiment, the first layer 20 may also comprise aluminum oxide (Al₂O₃), titanium dioxide (TiO₂), zirconium oxide (ZrO₂), boron oxide (B₂O₃), phosphorus oxide (P₂O₅), or tin oxide. Additionally, other materials that are dielectric may be suitable for use in the first layer 20.

In certain embodiments, the first layer 20 is deposited on the second layer 22 at a thickness of 100 nanometers (nm) or less. Preferably, the first layer 20 is deposited at a thickness of 40-100 nm. In some embodiments, it may be preferred that the thickness of the first layer 20 is 70-100 nm. In other embodiments, it may be preferred that the thickness of the first layer 20 is 40-70 nm, e.g. the thickness of the first layer 20 is preferably at least 45 nm, more preferably at least 50 nm, but preferably at most 65 nm, more preferably at most 60 nm.

In certain embodiments, the first layer 20 is pyrolytic. When the first layer 20 is pyrolytic, the first layer 20 may be deposited by an APCVD process. In other embodiments, the first layer 20 may not be pyrolytic. In these embodiments, the first layer 20 may be deposited utilizing a liquid, which provides a layer of the sol-gel variety. Conventional liquids for forming a sol-gel layer comprising silicon dioxide may be utilized to deposit the first layer 20. Preferably, in these embodiments, the liquid may comprise a hydrolysable silicon compound that undergoes hydrolysis and condensation. Preferred silicon compounds are silicon alkoxides such as, for example, tetraethoxysilane (TEOS). In certain embodiments, the liquid may also comprise silica particles. In embodiments where the liquid includes a metal oxide additive, the liquid may include halides, alkoxides, nitrates, or acetylacetonate compounds of aluminum, titanium, zirconium, or tin.

When the first layer 20 is deposited utilizing a liquid, the liquid is dried. Drying may be performed by heating the coated glass article 10 after the liquid has been applied over the second layer 22. Heating may be to a temperature of 250°C or less. Preferably, drying occurs at a temperature of 200°C or less. After drying, the first layer may be cured. Curing may be performed by irradiation with ultraviolet radiation, heating, or by another method. When the curing step comprises heating, the first layer 20 may be heated to a temperature of 90-720 °C. After curing, the coated glass article 10 is cooled over a predetermined period of time.

The second layer 22 is deposited over the glass substrate 12. More particularly, the second layer 22 is deposited over the first major surface 16 of the glass substrate 12. In an embodiment (not depicted), the second layer may be deposited directly on the first major surface of the glass substrate. When the second layer 22 is deposited directly on the first major surface 16 of the glass substrate 12, there are no intervening layers between the second layer 22 and the first major surface 16 of the glass substrate 12. In other embodiments, like the one illustrated in FIG. 1, the second layer 22 is deposited over the first major surface 16 of the glass substrate 12 and the iridescence-suppressing interlayer 24. The second layer 22 is provided between the first layer 20 and the glass substrate 12. In this position, the second layer 22 separates the first layer 20 from the glass substrate 12. If provided, the iridescence-suppressing interlayer 24 also separates the first layer 20 from the glass substrate 12.

The second layer 22 includes a low emissivity material. Thus, the second layer 22 may also be referred to herein as a low emissivity layer. The low emissivity material comprises a transparent conductive metal oxide. A preferred transparent conductive metal oxide is fluorine doped tin oxide (SnO₂:F). Thus, in some embodiments, the second layer 22 comprises fluorine doped tin oxide. In other embodiments, the second layer 22 may consist essentially of fluorine doped tin oxide. Due to the presence of the fluorine dopant, the second layer 22 is preferably electrically conductive and imparts the coated glass article 10 with a reduced emissivity when compared with a layer comprising undoped tin oxide (SnO₂) of the same thickness. However, other transparent conductive metal oxides may be suitable for use in the second layer 22. For example, in some embodiments, the second layer 22 may comprise antimony doped tin oxide (SnO₂:Sb) or another doped tin oxide. In these embodiments, the second layer 22 may consist essentially of antimony doped tin oxide or another doped tin oxide.

Preferably, the second layer 22 is pyrolytic and has a thickness of 1,000 nm or less. When the second layer 22 comprises fluorine doped tin oxide, the second layer 22 preferably has a thickness of less than 500 nm. In an embodiment, the second layer 22 has a thickness of 200-450 nm. Preferably the second layer 22 has a thickness of at least 250 nm, more preferably at least 290 nm, even more preferably at least 300 nm, but preferably at most 380 nm, more preferably at most 340 nm, even more preferably at most 330 nm. However, the second layer 22 may be of other thicknesses.

In some embodiments, the second layer 22 has a refractive index that is greater than the refractive index of the first layer 20. Preferably, the second layer 22 has a refractive index that is 1.6 or more. In certain embodiments, the refractive index of the second layer 22 is 1.8 or more. In one such embodiment, the refractive index of the second layer 22 is between 1.8 and 2.4. Preferably, the refractive index of the second layer 22 is between 1.8 and 2.0.

In some embodiments, an iridescence-suppressing interlayer 24 is provided between the glass substrate 12 and the second layer 22. The use of an iridescence-suppressing interlayer is desirable to reduce the reflected color or iridescence of the coated glass article 10 as the thickness of the first layer 20 and the second layer 22 increase within the range of 100 nm to 1,000 nm.

In certain embodiments, the iridescence-suppressing interlayer 24 is of a two-layer system. In other embodiments (not depicted), the iridescence-suppressing interlayer may be provided as a single coating layer. In these embodiments, the coated glass article may comprise only three layers. In the embodiments where the iridescence-suppressing interlayer 24 is a two-layer system, which is illustrated in FIG. 1, the coated glass article 10 comprises a third layer 28 deposited over and, preferably, directly on a fourth layer 30 and the fourth layer 30 deposited over and, preferably, directly on the first major surface 16 of the glass substrate 12. In this embodiment, the second layer 22 is deposited over and, preferably, directly on the third layer 28.

In some embodiments, the third layer 28 may be formed of an inorganic metal oxide. In other embodiments, the third layer 28 may comprise an oxide of silicon. In these embodiments, it is preferred that the third layer 28 comprise silicon dioxide (SiO₂). Preferably, the third layer 28 is deposited at a thickness of 10-40 nm. Preferably, the thickness of the third layer 28 is 15-30 nm. More preferably, the thickness of the third layer 28 is about 20 nm.

In some embodiments, the fourth layer 30 is formed of an inorganic metal oxide. Preferably, the fourth layer 30 comprises undoped tin oxide (SnO₂). In an embodiment, the fourth layer 30 is deposited at a thickness of 10-40 nm. Preferably, the thickness of the fourth layer 30 is 15-35 nm. More preferably, the thickness of the fourth layer 30 is about 25 nm.

After step (a) and before step (b), the coated glass article 10 is cooled to a temperature of less than 35°C, preferably cooled to a temperature of less than 30°C, more preferably cooled to a temperature of less than 25°C. When the coated glass article 10 is formed in conjunction with the float glass manufacturing process, the coated glass article 10 may be cooled in an annealing lehr (not depicted). In some embodiments, the coated glass article 10 may be flat. In other embodiments, after cooling, the coated glass article 10 may be curved by way of a shaping process. Additionally, the coated glass article 10 may be heat strengthened, thermally toughened, or chemically strengthened, which may occur before or after deposition of the coating 14.

After forming the coated glass article 10, the coated glass article 10 may exhibit certain desirable properties. For example, the coated glass article 10 may exhibit a desirable total visible light transmittance. For describing the coated glass article 10, total visible light transmittance will refer to the percentage of visible light passing through the coated glass article 10 as measured at a 90 degree angle incident to the coated glass article 10 from the side 32 of the coated glass article 10 that has the coating 14 formed on the surface of the glass substrate 12 (coated side). Additionally, the criteria for and arrangement of the coating layers 20-24 is such that an anti-reflective effect is provided and a desirable total visible light reflectance is exhibited by the coated glass article 10. For describing the coated glass article 10, total visible light reflectance will refer to the percentage of visible light reflected from the coated glass article 10 as measured at a 90 degree angle incident to the coated glass article 10 from the coated side 32 of the coated glass article 10. Further, the total visible light transmittance and total visible light reflectance will be described herein according to the CIELAB color scale system using Illuminant A, 2 degree observer and can be measured using a commercially available spectrophotometer such as the Perkin Elmer Lambda 950.

In some embodiments, the coated glass article 10 exhibits a total visible light transmittance (Illuminant A, 2 degree observer) of more than 70.0%. In these embodiments, the coated glass article 10 may be utilized in a windshield, side window, or rear window of the vehicle. In other embodiments, the coated glass article 10 exhibits a total visible light transmittance (Illuminant A, 2 degree observer) of less than 70.0%. In certain embodiments, the coated glass article 10 may exhibit a total visible light transmittance (Illuminant A, 2 degree observer) of less than 20.0%. In these embodiments, the coated glass article 10 may be utilized in a roof glazing, side window, or rear window of the vehicle. In some embodiments, the total visible light transmittance (Illuminant A, 2 degree observer) is 10.0% or less. In other embodiments, the total visible light transmittance (Illuminant A, 2 degree observer) is 5.0% or less. In this embodiment, the total visible light transmittance (Illuminant A, 2 degree observer) may be 2.0-5.0%. Additionally, it is preferred that, in the embodiments described above, the coated glass article 10 exhibits a total visible light reflectance (Illuminant A, 2 degree observer) of 5.0% or less. In an embodiment, the total visible light reflectance (Illuminant A, 2 degree observer) is 1.0-5.0%. More preferably, the total visible light reflectance (Illuminant A, 2 degree observer) is 4.0% or less. In some embodiments, the total visible light reflectance (Illuminant A, 2 degree observer) of the coated glass article 10 is 3.5% or less. In one such embodiment, the total visible light reflectance (Illuminant A, 2 degree observer) is 1.0-3.5%.

The coated glass article 10 may also exhibit other properties that are advantageous. For example, when the iridescence-suppressing interlayer 24 is provided, the coated glass article 10 may exhibit a neutral color for the visible light reflected from the coated side 32 of the coated glass article 10 when viewed at a 90 degree angle incident to the coated glass article 10. The color of the visible light reflected from the coated side 32 of the glass article 10 may be referred to herein as "reflected color." The reflected color will be described herein according to the CIELAB color scale system using Illuminant A, 2 degree observer. Reflected color can be measured using a commercially available spectrophotometer such as the Perkin Elmer Lambda 950. Also, for the purpose of describing the embodiments of the coated glass article 10 disclosed herein, a neutral color for the visible light reflected from the coated side 32 of the coated glass article 10 has an a* value (Illuminant A, 2 degree observer) in the range of -6 to 6 and a b* value (Illuminant A, 2 degree observer) in the range of -6 to 6.

The coated glass article 10 may exhibit a low total solar energy transmittance. As used herein, total solar transmittance (TTS) is defined as including solar energy transmitted directly through the window assembly and the solar energy absorbed by the assembly, and subsequently convected and thermally radiated inwardly integrated over the wavelength range 300 to 2500 nm according to the relative solar spectral distribution for air mass 1.5. The total solar transmittance may be determined according to a recognized standard such as ISO 13837:2008 convention A and at a wind speed of 14 kilometers per hour. In an embodiment, the coated glass article 10 exhibits a total solar energy transmittance of 35.0 or less. Preferably, the total solar energy transmittance exhibited by the coated glass article 10 is 30.0 or less. More preferably, the total solar energy transmittance exhibited by the coated glass article 10 is 25.0 or less. Even more preferably, the total solar energy transmittance exhibited by the coated glass article 10 is 20.0 or less.

In some embodiments, the coated glass article 10 may exhibit a low transmitted energy (TE), which reduces the amount of heat transmitted through the article 10. As used herein, transmitted energy or direct solar heat transmission (DSHT) is measured at Air Mass 2 (simulated rays from the sun incident at an angle of 30° to the horizontal) over the wavelength range 350 to 2100 nm at 50 nm intervals. In an embodiment, the coated glass article 10 may exhibit a transmitted energy of 30% or less, when measured at Air Mass 2, ISO 9050. Preferably, the coated glass article 10 may exhibit a transmitted energy of less than 20% and more preferably less than 10%.

Unfortunately, the second layer 22 of the coating 14 may be damaged during manufacturing. More particularly, it is believed that hydrogen (H₂) in the heated zone of the float glass manufacturing process diminishes the ability of the second layer 22 to reflect infrared light, which increases the emissivity of the coated glass article 10. Thus, when the second layer 22 is damaged and the coated glass article 10 is utilized in a window for a vehicle, the coated glass article 10 will not provide as good of an insulating effect for the passenger cabin of the vehicle.

The emissivity of the coated glass article 10 can be measured using a commercially available spectrometer such as the Perkin Elmer FTIR. In embodiments where the ability of the second layer 22 to reflect infrared light has been diminished, the coated glass article 10 will exhibit a first emissivity. In some embodiments, the first emissivity may be more than 0.19. In one such embodiment, the first emissivity may be 0.19-0.21. In other embodiments, the first emissivity may be 0.16 or more. In these embodiments, the first emissivity may be 0.16-0.21.

Advantageously, it has been discovered that the ability of the second layer 22 to reflect infrared light can be at least partially restored and the emissivity of the coated glass article 10 can be reduced from the first emissivity. In these embodiments, the coated glass article 10 will exhibit a second emissivity. The second emissivity is less than the first emissivity. In some embodiments, the second emissivity may be 0.19 or less. In one such embodiment, the second emissivity may be 0.10-0.19. Thus, when the coated glass article 10 is utilized in a window for a vehicle, the coated glass article 10 will provide a better insulating effect for the passenger cabin of the vehicle.

In order for the coated glass article 10 to exhibit a second emissivity, the coated glass article 10 may be delivered to an apparatus 40, which is illustrated in FIG. 2. The apparatus 40 may be open and include an atmosphere comprising air. The apparatus 40 may be utilized to heat the coated glass article 10 after cooling. In an embodiment, the apparatus 40 comprises a furnace 42. In this embodiment, the coated glass article 10 may enter the furnace 42 on rollers 44. The furnace 42 may comprise one or more heating elements (not depicted). The coated glass article 10 is preferably heated to a predetermined temperature and for a predetermined period of time in the furnace 42.

Step (b) is carried out in an environment set to a predetermined temperature of 550-675°C, preferably 550-650°C, more preferably 575-650°C, most preferably 600-650°C.

Preferably, the coated glass article 10 is heated to a predetermined temperature of 400°C or more. More preferably, the coated glass article 10 is heated to a predetermined temperature of 500-700°C. More preferably, the coated glass article 10 is heated to a predetermined temperature of 530-675°C, even more preferably 550-650°C, even more preferably 560-635°C, most preferably 585-635°C.

The predetermined period of time for heating the coated glass article 10 is 1-10 minutes. Preferably, the predetermined period of time for heating the coated glass article 10 is 3-8 minutes. Even more preferably, the predetermined period of time for heating the coated glass article 10 may be about 4-6 minutes. If the predetermined period of time for heating the coated glass article 10 is too short the reduction is emissivity will not occur or the coated glass article 10 may crack while cooling. If the predetermined period of time for heating the coated glass article 10 is too long the coated glass article 10 may undesirably deform.

Preferably, following the predetermined period of time for heating the coated glass article 10, said article is allowed to cool to ambient temperature by being placed in an environment set to less than 30°C, more preferably less than 25°C, but preferably more than 15°C, more preferably more than 20°C.

Advantageously, the method may allow for an increase in the conductivity and a reduction in the sheet resistance exhibited by the coated glass article 10. As should be appreciated, it may be desirable in certain applications to have a coated glass article 10 that exhibits higher conductivity and a lower sheet resistance. In some embodiments and prior to delivering the coated glass article 10 to the apparatus 40, the coated glass article 10 may exhibit a first sheet resistance. For example, the coated glass article 10 may exhibit a first sheet resistance of more than 16 Ohms per square (Ω/sq.). In this embodiment, the initial sheet resistance exhibited by the coated glass article 10 may be 16-20 Ω/sq. However, upon entering the apparatus 40 and being heated as described above, the sheet resistance of the coated glass article 10 may change due to changes in the electron mobility and carrier concentration of the second layer 22. Preferably, the sheet resistance of the coated glass article 10 decreases due to an increase in the carrier concentration of the second layer 22 when the coated glass article 10 is heated.

In embodiments where the sheet resistance exhibited by the coated glass article 10 has been decreased, the coated glass article 10 will exhibit a second sheet resistance. In these embodiments, the second sheet resistance will be less than the first sheet resistance. For example, the coated glass article 10 may exhibit a second sheet resistance of 16 Ω/sq. or less after being heated to a predetermined temperature and for a predetermined period of time.

After being heated for a predetermined period of time, the coated glass article 10 may be removed from the apparatus on take-away rollers 46.

After heating the coated glass article to a predetermined temperature and for a predetermined period of time the article may be laminated to a second glass article, preferably a second coated glass article, to form a laminated glass article. In an embodiment, the second coated glass article may be of a glass/SnO₂/SiO₂/SnO₂:F or other suitable arrangement. The laminated glass article may be curved/bent by way of a shaping process. The method of the present invention enables better matching of the emissivity of coated glass articles that are to be laminated together and then curved/bent. This is important because if there is a mismatch between the emissivities of the two coated glass articles then the shaping is more likely to result in an unusable product.

The present invention also provides the use of the method according to the preceding aspect to reduce the emissivity of a coated glass article (10).

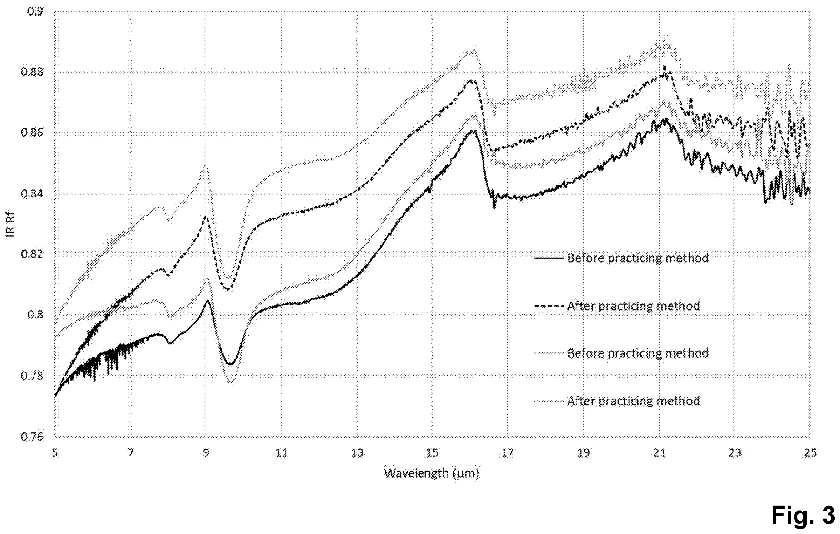

FIG. 3 illustrates the infrared radiation reflectance spectrum from 5-25 micrometers for separate coated glass articles before and after practicing embodiments of the method described above. As illustrated, before practicing the method, each coated glass article 10 exhibits a reflectance, indicated by the solid lines, that provides a first emissivity. After practicing the method, each coated glass article exhibits a reflectance, indicated by the dashed lines, that provides a second emissivity. As shown, the reflectance of infrared radiation for each coated glass article increases and the second emissivity of each coated glass article is less than the first emissivity. Thus, the reflectance of infrared radiation and emissivity exhibited by each coated glass article is improved by practicing the method.

### EXAMPLES

The following examples are presented solely for the purpose of further illustrating and disclosing the embodiments of the method. Examples of the coated glass article within the scope of the invention are described below and illustrated in TABLES 1 and 2. In TABLES 1 and 2, the coated glass articles within the scope of the invention are Ex 1-Ex 4. Ex 1-Ex 4 were derived from depositing coatings on 3.2 mm clear glass substrates, measuring the optical spectra of the resulting coated glass articles, and then predicting the optical properties of coated glass articles having the same coatings on grey glass substrates.

Each glass substrate was of a soda-lime-silica composition and formed as a portion of a float glass ribbon. A pyrolytic coating was deposited on each glass substrate as it was moving and the coating was deposited on the substrate in the heated zone of the float glass manufacturing process.

Each coating comprised a first layer, second layer, and an iridescence-suppressing interlayer. The first layer was deposited over the glass substrate and on the second layer. The second layer was provided between the first layer and the glass substrate and on the iridescence-suppressing interlayer. For each of Ex1-Ex 4, the first layer comprised silicon dioxide. For Ex 1, the thickness of the first layer was 55 nm and the first layer has a refractive index of 1.46. For Ex 2, the thickness of the first layer was 90 nm and the first layer has a refractive index of 1.46. For Ex 3, the thickness of the first layer was 45 nm and the first layer has a refractive index of 1.46. For Ex 4, the thickness of the first layer was 80 nm and the first layer has a refractive index of 1.46. For each of Ex1-Ex 4, the second layer comprised fluorine doped tin oxide. For Ex 1 and Ex 3, the thickness of the second layer was 310 nm. For Ex 2 and Ex 4, the thickness of the second layer was 410 nm. The iridescence-suppressing interlayer was provided between the glass substrate and the second layer. The iridescence-suppressing interlayer was a two-layer system. The iridescence-suppressing interlayer comprised a third layer deposited directly on a fourth layer and the fourth layer was deposited directly on the first major surface of the glass substrate. Each third layer comprised silicon dioxide. For Ex 1 and Ex 3, the thickness of the third layer was 30 nm. For Ex 2 and Ex 4, the thickness of the third layer was 16 nm. Each fourth layer comprised undoped tin oxide. For Ex 1 and Ex 3, the thickness of the fourth layer was 20 nm. For Ex 2 and Ex 4, the thickness of the fourth layer was 30 nm. Thus, the coated glass articles of Ex 1-Ex 4 are each of a glass/SnO₂/SiO₂/SnO₂:F/SiO₂ arrangement.

After forming the coated glass articles of Ex 1-Ex 4, each coated glass article was cooled to an ambient temperature of from 20 to 25°C in an annealing lehr. Each coated glass article was cut into three smaller coated glass articles to enable testing at three different temperatures. The articles were then delivered to a furnace for reheating. The furnace was set to a temperature of 650°C, 625°C or 600°C depending on which article was to be tested. Each coated glass article was held in the furnace for 5 minutes.

Prior to entering the furnace, the first emissivity (ε1) and first sheet resistance (SR1) of the coated glass articles of Ex 1-Ex 4 were measured (SR1 was only measured for the articles to be heated in the furnace set to a temperature of 650°C). After heating, the second emissivity (ε2) and second sheet resistance (SR2) of each coated glass article was measured (SR2 was only measured for the articles heated in the furnace set to a temperature of 650°C). The emissivities (ε1, ε2) and sheet resistances (SR1, SR2) of the coated glass articles of Ex 1-Ex 4 are reported in TABLE 2. The emissivities of the coated glass articles of Ex 1-Ex 4 were measured using a Perkin Elmer FTIR spectrometer. The sheet resistances of the coated glass articles of Ex 1-Ex 4 are reported in Ω/sq. and were measured using a four-point probe. Also, the total visible light transmittance (Tvis), total visible light reflectance (Rf), reflected color (Rfa*, Rfb*), and total solar energy transmittance (TTS) are reported in TABLE 1. For the coated glass articles of Ex 1-Ex 4, the total visible light transmittance, total visible light reflectance, reflected color, and total solar energy transmittance were calculated by modeling and according to the CIELAB color scale system using illuminant A, 2 degree observer. For the coated glass articles of Ex 1-Ex 4, the total visible light transmittance refers to the percentage of visible light passing through the article that would be measured from the side facing the coating. The total visible light reflectance is reported for the coated side of the coated glass article. The visible light reflectance refers to the percentage of visible light reflected from the coated glass article that would be measured from the side of the article that faces the coating. The total visible light reflectance and the total visible light transmittance are expressed as percentages. The reflected color is reported for the coated side of the coated glass articles of Ex 1-Ex 4. Also, the total solar energy transmittance reported below is expressed as a percentage.

**TABLE 1**

| **Examples** | **Tvis** | **Rf** | **Rfa*** | **Rfb*** | **TTS** |
|---|---|---|---|---|---|
| **Ex 1** | 3.1 | 3.1 | 0.8 | 5.9 | 18.9 |
| **Ex 2** | 3.1 | 1.5 | -1.4 | -7.2 | 18.7 |
| **Ex 3** | 3.1 | 3.7 | 0.2 | 2.6 | 18.9 |
| **Ex 4** | 3.1 | 1.6 | -2.2 | -3.3 | 18.2 |

**TABLE 2**

| | **Heated at 650°C for 5 min** | | | | **Heated at 625°C for 5 min** | | **Heated at 600°C for 5 min** | |
|---|---|---|---|---|---|---|---|---|
| | **Before heating** | **After heating** | **Before heating** | **After heating** | **Before heating** | **After heating** | **Before heating** | **After heating** |
| **Examples** | **ε1** | **ε2** | **SR1** | **SR2** | **ε1** | **ε2** | **ε1** | **ε2** |
| **Ex 1** | 0.20 | 0.18 | 18.0 | 16.0 | 0.20 | 0.19 | 0.20 | 0.19 |
| **Ex 2** | 0.16 | 0.15 | 11.9 | 10.6 | 0.17 | 0.16 | 0.17 | 0.16 |
| **Ex 3** | 0.20 | 0.18 | 17.8 | 15.8 | 0.20 | 0.19 | 0.20 | 0.19 |
| **Ex 4** | 0.16 | 0.14 | 11.5 | 10.2 | 0.17 | 0.16 | 0.17 | 0.16 |

As illustrated in TABLE 2, the coated glass articles of Ex 1-Ex 4 each exhibited a first emissivity and a second emissivity. In each of Ex 1-Ex 4, the emissivity exhibited by the coated glass article was reduced after practicing the method. Thus, the second emissivity exhibited by each coated glass article was less than the first emissivity exhibited by the coated glass article. As such, after practicing the method, each of the coated glass articles of Ex 1-Ex 4 would provide a better insulating effect for the passenger cabin when the coated glass article is utilized in a window for a vehicle.

Additionally, the coated glass articles of Ex 1-Ex 4 each exhibit a first sheet resistance and a second sheet resistance. In each of Ex 1-Ex 4, the sheet resistance of the coated glass article decreased after practicing the method. Thus, the second sheet resistance exhibited by each coated glass article was less than the first sheet resistance exhibited by the coated glass article. As such, after practicing the method, each of the coated glass articles of Ex 1-Ex 4 was more conductive.

Additionally, as shown in TABLE 1, the coated glass articles of Ex 1-Ex 4 each exhibit a total visible light transmittance (Illuminant A, 2 degree observer) of less than 5.0% and total visible light reflectance (Illuminant A, 2 degree observer) of less than 4.0%. Also, the coated glass articles of Ex1 and Ex 3-Ex 4 exhibit a neutral reflected color at a normal angle of incidence. Thus, if one of those coated glass articles is utilized in a window for a vehicle, the coated glass article will have a pleasing appearance. It should also be noted that the coated glass articles of Ex 1-Ex 4 exhibited a direct solar energy transmittance of less than 20.0%. Thus, in the summer, if one of the coated glass articles of Ex 1-Ex 4 is utilized in a window for a vehicle, the coated glass article will help to prevent the passenger cabin from overheating.

## Claims

1. A method of reducing the emissivity of a coated glass article (10), comprising the following steps in sequence:
(a) forming a coated glass article (10), the coated glass article (10) comprising a glass substrate (12) and a coating (14) formed on the glass substrate (12), the coating (14) having a first layer (20) deposited over the glass substrate (12) and a second layer (22), the second layer (22) being provided between the first layer (20) and the glass substrate (12), wherein the coated glass article (10) exhibits a first emissivity; and
(b) heating the coated glass article (10) in an environment set to a predetermined temperature and for a predetermined period of time,
wherein, after step (b), the coated glass article (10) exhibits a second emissivity, the second emissivity being less than the first emissivity,
wherein after step (a) and before step (b) the coated glass article (10) is cooled to a temperature of less than 35°C,
wherein the first layer (20) comprises silicon dioxide (SiO₂) or another suitable oxide of silicon,
wherein the second layer (22) comprises a transparent conductive metal oxide, preferably fluorine doped tin oxide (SnO₂:F),
wherein step (b) is carried out in an environment set to a predetermined temperature of 550-675°C, preferably 550-650°C, more preferably 575-650°C, most preferably 600-650°C, and
wherein the predetermined period of time for heating the coated glass article 10 is 1-10 minutes.

2. The method according to claim 1, wherein the coating (14) is formed on a first major surface (16) of the glass substrate (12) and wherein a second major surface (18) of the glass substrate (12) and an opposite side of the coated glass article (10) is uncoated.

3. The method according to claim 1 or claim 2, wherein the coating (14) further comprises an iridescence-suppressing interlayer (24) provided between the second layer (22) and the glass substrate (12).

4. The method according to any preceding claim, wherein the coating (14) is pyrolytic.

5. The method according to any preceding claim, wherein the coating (14) is formed in conjunction with the manufacture of the glass substrate (12), preferably wherein the glass substrate (12) is formed utilizing the well-known float glass manufacturing process.

6. The method according to any preceding claim, wherein at least one layer (20-24) of the coating (14) is deposited on the glass substrate (12) by atmospheric pressure chemical vapor deposition (APCVD).

7. The method according to any preceding claim, wherein the thickness of the first layer (20) is 40-70 nm.

8. The method according to any preceding claim, wherein the second layer (22) has a thickness of at least 250 nm, preferably at least 290 nm, even more preferably at least 300 nm, but at most 380 nm, more preferably at most 340 nm, even more preferably at most 330 nm.

9. The method according to any preceding claim, wherein the predetermined period of time for heating the coated glass article 10 is 3-8 minutes, preferably 4-6 minutes.

10. The method according to any preceding claim, wherein after step (b) the article (10) is laminated to a second glass article, preferably a second coated glass article, to form a laminated glass article, and the laminated glass article is bent by way of a shaping process.

11. The method according to any preceding claim, wherein the coated glass article (10) is utilized in a window for a vehicle, preferably wherein the first major surface (16) of the glass substrate (12) and the coating (14) face into the passenger cabin of the vehicle.

12. Use of the method according to any preceding claim to reduce the emissivity of a coated glass article (10).

## Patentansprüche

1. Verfahren zum Reduzieren des Emissionsvermögens eines beschichteten Glaserzeugnisses (10), das der Reihe nach die folgenden Schritte umfasst:
(a) Bilden eines beschichteten Glaserzeugnisses (10), wobei das beschichtete Glaserzeugnis (10) ein Glassubstrat (12) und eine auf dem Glassubstrat (12) gebildete Beschichtung (14) umfasst, wobei die Beschichtung (14) eine erste Schicht (20), die über dem Glassubstrat (12) abgeschieden ist, und eine zweite Schicht (22) aufweist, wobei die zweite Schicht (22) zwischen der ersten Schicht (20) und dem Glassubstrat (12) vorgesehen ist, wobei das beschichtete Glaserzeugnis (10) ein erstes Emissionsvermögen aufweist; und
(b) Erhitzen des beschichteten Glaserzeugnisses (10) in einer auf eine vorgegebene Temperatur eingestellten Umgebung und für eine vorgegebene Zeitdauer,
wobei das beschichtete Glaserzeugnis (10) nach Schritt (b) ein zweites Emissionsvermögen aufweist, wobei das zweite Emissionsvermögen geringer ist als das erste Emissionsvermögen,
wobei das beschichtete Glaserzeugnis (10) nach Schritt (a) und vor Schritt (b) auf eine Temperatur von weniger als 35 °C abgekühlt wird,
wobei die erste Schicht (20) Siliziumdioxid (SiO₂) oder ein anderes geeignetes Siliziumoxid umfasst,
wobei die zweite Schicht (22) ein transparentes leitfähiges Metalloxid, vorzugsweise fluordotiertes Zinnoxid (SnO₂:F), umfasst,
wobei Schritt (b) in einer Umgebung durchgeführt wird, die auf eine vorgegebene Temperatur von 550-675°C, bevorzugt 550-650°C, bevorzugter 575-650°C, am meisten bevorzugt 600-650°C, eingestellt ist, und
wobei die vorgegebene Zeitdauer zum Erhitzen des beschichteten Glaserzeugnisses 10 1 bis 10 Minuten beträgt.

2. Verfahren nach Anspruch 1, bei dem die Beschichtung (14) auf einer ersten Hauptoberfläche (16) des Glassubstrats (12) ausgebildet wird und bei dem eine zweite Hauptoberfläche (18) des Glassubstrats (12) und eine gegenüberliegende Seite des beschichteten Glaserzeugnisses (10) unbeschichtet sind.

3. Verfahren nach Anspruch 1 oder 2, bei dem die Beschichtung (14) ferner eine irisierende Effekte unterdrückende Zwischenschicht (24) umfasst, die zwischen der zweiten Schicht (22) und dem Glassubstrat (12) vorgesehen ist.

4. Verfahren nach einem der vorhergehenden Ansprüche, bei dem die Beschichtung (14) pyrolytisch ist.

5. Verfahren nach einem der vorhergehenden Ansprüche, bei dem die Beschichtung (14) in Verbindung mit der Herstellung des Glassubstrats (12) gebildet wird, wobei das Glassubstrat (12) vorzugsweise unter Verwendung des bekannten Floatglas-Herstellungsverfahrens gebildet wird.

6. Verfahren nach einem der vorhergehenden Ansprüche, bei dem mindestens eine Schicht (20-24) der Beschichtung (14) auf dem Glassubstrat (12) durch chemische Gasphasenabscheidung bei Atmosphärendruck (APCVD) abgeschieden wird.

7. Verfahren nach einem der vorhergehenden Ansprüche, bei dem die Dicke der ersten Schicht (20) 40-70 nm beträgt.

8. Verfahren nach einem der vorhergehenden Ansprüche, bei dem die zweite Schicht (22) eine Dicke von mindestens 250 nm, bevorzugter mindestens 290 nm, besonders bevorzugt mindestens 300 nm, höchstens jedoch 380 nm, bevorzugter höchstens 340 nm, besonders bevorzugt höchstens 330 nm aufweist.

9. Verfahren nach einem der vorhergehenden Ansprüche, bei dem die vorgegebene Zeitdauer zum Erhitzen des beschichteten Glaserzeugnisses 10 3 bis 8 Minuten, vorzugsweise 4 bis 6 Minuten, beträgt.

10. Verfahren nach einem der vorhergehenden Ansprüche, bei dem nach Schritt (b) das Erzeugnis (10) auf ein zweites Glaserzeugnis, vorzugsweise ein zweites beschichtetes Glaserzeugnis, laminiert wird, um ein Verbundglaserzeugnis zu bilden, und das Verbundglaserzeugnis mittels eines Formgebungsverfahrens gebogen wird.

11. Verfahren nach einem der vorhergehenden Ansprüche, bei dem das beschichtete Glaserzeugnis (10) in einem Fenster für ein Fahrzeug verwendet wird, wobei vorzugsweise die erste Hauptoberfläche (16) des Glassubstrats (12) und die Beschichtung (14) in den Fahrgastraum des Fahrzeugs weisen.

12. Verwendung des Verfahrens nach einem der vorhergehenden Ansprüche zur Verringerung des Emissionsvermögens eines beschichteten Glaserzeugnisses (10).

## Revendications

1. Procédé de réduction de l'émissivité d'un article en verre revêtu (10), comprenant les étapes suivantes en séquence :
(a) formation d'un article en verre revêtu (10), l'article en verre revêtu (10) comprenant un substrat en verre (12) et un revêtement (14) formé sur le substrat en verre (12), le revêtement (14) ayant une première couche (20) déposée sur le substrat en verre (12) et une deuxième couche (22), la deuxième couche (22) étant disposée entre la première couche (20) et le substrat en verre (12), dans laquelle l'article en verre revêtu (10) présente une première émissivité ; et
(b) chauffage de l'article en verre revêtu (10) dans un environnement réglé à une température prédéterminée et pendant une période de temps prédéterminée,
dans lequel, après l'étape (b), l'article en verre revêtu (10) présente une deuxième émissivité, la deuxième émissivité étant inférieure à la première émissivité,
dans lequel, après l'étape (a) et avant l'étape (b), l'article en verre revêtu (10) est ramené à une température inférieure à 35 °C,
dans lequel la première couche (20) comprend du dioxyde de silicium (SiO₂) ou un autre oxyde de silicium convenable,
dans lequel la deuxième couche (22) comprend un oxyde métallique conducteur transparent, de préférence de l'oxyde d'étain dopé au fluor (SnO₂:F),
dans lequel l'étape (b) est mise en oeuvre dans un environnement réglé à une température prédéterminée de 550 à 675 °C, de préférence de 550 à 650 °C, mieux encore de 575 à 650 °C, tout spécialement de 600 à 650 °C, et
dans lequel la période de temps prédéterminée pour le chauffage de l'article en verre revêtu (10) est de 1 à 10 minutes.

2. Procédé selon la revendication 1, dans lequel le revêtement (14) est formé sur une première surface majeure (16) du substrat en verre (12) et dans lequel une deuxième surface majeure (18) du substrat en verre (12) et un côté opposé de l'article en verre revêtu (10) ne sont pas revêtus.

3. Procédé selon la revendication 1 ou la revendication 2, dans lequel le revêtement (14) comprend en outre une couche intermédiaire supprimant l'iridescence (24) disposée entre la deuxième couche (22) et le substrat en verre (12).

4. Procédé selon l'une quelconque des revendications précédentes, dans lequel le revêtement (14) est pyrolytique.

5. Procédé selon l'une quelconque des revendications précédentes, dans lequel le revêtement (14) est formé conjointement avec la fabrication du substrat en verre (12), de préférence dans lequel le substrat en verre (12) est formé par utilisation d'un procédé bien connu de fabrication de verre flotté.

6. Procédé selon l'une quelconque des revendications précédentes, dans lequel au moins une couche (20-24) du revêtement (14) est déposée sur le substrat en verre (12) par dépôt chimique en phase vapeur sous la pression atmosphérique (APCVD).

7. Procédé selon l'une quelconque des revendications précédentes, dans lequel l'épaisseur de la première couche (20) est de 40 à 70 nm.

8. Procédé selon l'une quelconque des revendications précédentes, dans lequel la deuxième couche (22) a une épaisseur d'au moins 250 nm, de préférence d'au moins 290 nm, mieux encore d'au moins 300 nm, mais d'au plus 380 nm, mieux encore d'au plus 340 nm, mieux encore d'au plus 330 nm.

9. Procédé selon l'une quelconque des revendications précédentes, dans lequel la période de temps prédéterminée pour le chauffage de l'article en verre revêtu (10) est de 3 à 8 minutes, de préférence de 4 à 6 minutes.

10. Procédé selon l'une quelconque des revendications précédentes, dans lequel, après l'étape (b), l'article (10) est stratifié à un deuxième article en verre, de préférence un deuxième article en verre revêtu, pour former un article en verre feuilleté, et l'article en verre feuilleté est cintré au moyen d'un traitement de mise en forme.

11. Procédé selon l'une quelconque des revendications précédentes, dans lequel l'article en verre revêtu (10) est utilisé pour une vitre pour un véhicule, de préférence dans lequel la surface majeure (16) du substrat en verre (12) et le revêtement (14) sont orientés vers la cabine passagers du véhicule.

12. Utilisation du procédé de l'une quelconque des revendications précédentes pour réduire l'émissivité d'un article en verre revêtu (10).
